# EUROPÄISCHE PATENTANMELDUNG

(11) **EP 2 669 118 A1**
(43) Veröffentlichungstag der Anmeldung: **04.12.2013**
(21) Anmeldenummer: 13466007.5
(22) Anmeldetag: 27.05.2013
(51) Int. Cl.: B60R 1/00

(54) **Beobachtungspiegel des Fahrzeuges**

(30) Priorität: 31.05.2012 CZ 20120364
(71) Anmelder: Skoda Auto a.s., 293 60 Mlada Boleslav (CZ)
(72) Erfinder: Kraus, Ladislav, 512 36 Horni Branná (CZ); Novotný, Josef, 518 01 Dobruska (CZ)

(57) **Zusammenfassung**

Der Beobachtungsspiegel (1) ist im Fahrzeuginnenraum im Bereich zwischen dem gewöhnlichen Innenrückblickspiegel und dem Dachhimmel (3) angeordnet. Der Beobachtungsspiegel (1) dient zum Beobachten des Rücksitzbankraumes des Fahrzeuges. Die Darstellung der Erfindung liegt darin, dass der Beobachtungsspiegel (1) einen Halter (2) umfasst, der fest zum Fahrzeugdachhimmel (3) befestigt ist. Dieser Halter (2) und der Beobachtungsspiegel (1) sind mittels einer Clipverbindung (6) lösbar und schwenkbar miteinander verbunden. Die schwenkbare Clipverbindung (6) wird durch die Backen (7) und den zylindrischen Teil (8) gebildet, der zum Halter (2) befestigt ist. Die Backen (7) sind an der Rückseite des Beobachtungsspiegels (1) angebracht und schwenkbar mit dem zylindrischen Teil (8) verbunden. Der Beobachtungsspiegel (1) umfasst ein konvexes Spiegelglas (9), das die benötigte konvexe Wölbung aufweist.

## Beschreibung

### Technisches Gebiet

Die Erfindung betrifft einen Beobachtungsspiegel, der im Fahrzeuginnenraum zwischen dem vorhandenen Innenrückblickspiegel und dem vorderen Rand des Dachhimmels angeordnet und zum Dachhimmel des Fahrzeuges befestigt ist.

### Bisheriger Stand der Technik

Die Nutzung eines Beobachtungsspiegels zwecks Überwachung der in den Kindersitzen auf der Rücksitzbank des Personenkraftfahrzeuges sitzenden Kleinkinder sowie die Anordnung solches Beobachtungsspiegels im Bereich des vorhandenen Innenrückblickspiegels ist bekannt. Die Befestigung der Beobachtungsspiegel wird auf verschiedene Art gelöst. Der Beobachtungsspiegel kann mit einem Clip an der Sonnenblende befestigt werden. Diese Lösung ist ziemlich unzuverlässig, sieht "billig" aus und stimmt mit dem Fahrzeuginnenraum nicht überein.

Als weitere Lösung wird die Befestigung eines zusätzlichen Innenrückblickspiegels mit zusätzlichen Halterungen zum vorhandenen Innenrückblickspiegel verwendet. Aus dem Dokument DE3827995C2 ist ein zusätzlicher Innenrückblickspiegel bekannt, der unter dem vorhandenen Innenrückblickspiegel angeordnet ist. Dieser zusätzliche Beobachtungsspiegel ist mit einer Halterung zu dem gewöhnlichen Innenrückblickspiegel befestigt. Der Nachteil dieser Lösung liegt in ihrer komplizierten und aufwendigen Konstruktion, die sowohl einen zusätzlichen Halter, als auch zusätzliche konstruktive Anpassungen des gewöhnlichen Innenrückblickspiegels für die Befestigung des Halters des zusätzlichen Beobachtungsspiegels bedarf.

### Darstellung der Erfindung

Die Aufgabe wird durch den erfindungsgemäßen Beobachtungsspiegel gelöst, der im Fahrzeuginnenraum in einer vorteilhaften Ausführung in dem Bereich zwischen dem gewöhnlichen Innenrückblickspiegel und dem vorderen Rand des Dachhimmels angeordnet ist. Der Beobachtungsspiegel dient zum Beobachten des Rücksitzbankraumes des Fahrzeuges.

Die Darstellung der Erfindung liegt darin, dass der Beobachtungsspiegel einen Halter umfasst, der fest zum Dachhimmel des Fahrzeuges befestigt ist. Dieser Halter und der Beobachtungsspiegel sind mittels einer Clipverbindung lösbar und schwenkbar miteinander verbunden. Die schwenkbare Clipverbindung umfasst die Backen und einen zylindrischen Teil, der zum Halter befestigt ist. Die Backen sind an der Rückseite des Beobachtungsspiegels angebracht und schwenkbar mit dem zylindrischen Teil verbunden. Diese schwenkbare Clipverbindung ermöglicht die Einstellung des Spiegels in die für das Beobachten der Fahrzeuginsassen im Fondbereich des Fahrzeuges benötigte Beobachtungsposition. Die lösbare Verbindung des Halters mit dem Beobachtungsspiegel ermöglicht einen einfachen Austausch des Beobachtungsspiegels für einen ähnlichen Beobachtungsspiegel, jedoch mit anderer Wölbung der Spiegelfläche.

Der Beobachtungsspiegel weist auf seiner Vorderseite ein konvexes Spiegelglas auf, das für das Beobachten des Fondbereiches geeignet gewölbt ist. Das konvexe Spiegelglas kann zur Vorderseite des Beobachtungsspiegels fest oder lösbar befestigt werden. Bei einer lösbaren Verbindung des konvexen Spiegelglases mit dem Beobachtungsspiegel weist der Beobachtungsspiegel eine Rastöffnung und das konvexe Spiegelglas ein Sperrelement auf. Diese Rastöffnung und das Sperrelement ermöglichen eine lösbare Verbindung und die Verrastung des konvexen Spiegelglases an der Vorderseite des Beobachtungsspiegels.

### Übersicht der Figuren der Zeichnungen

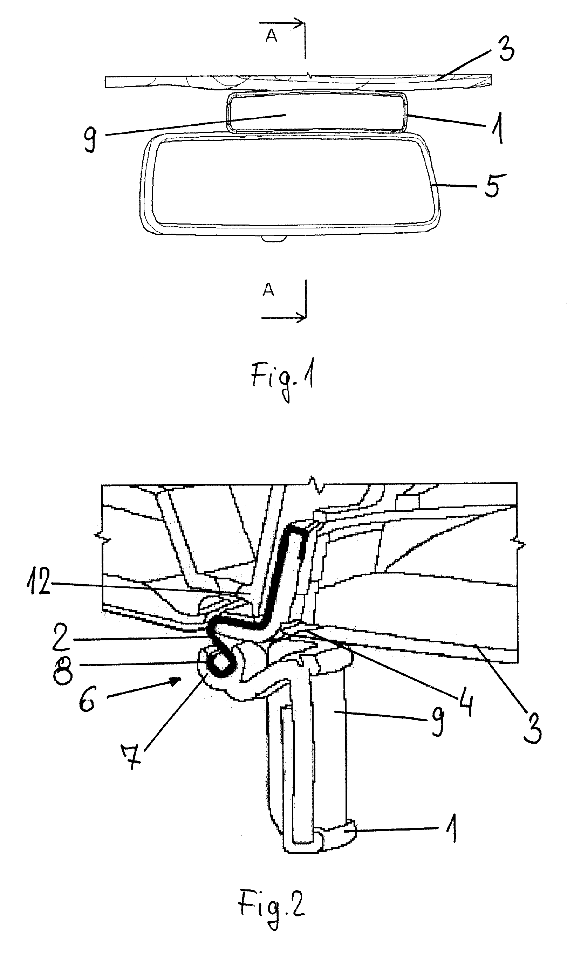

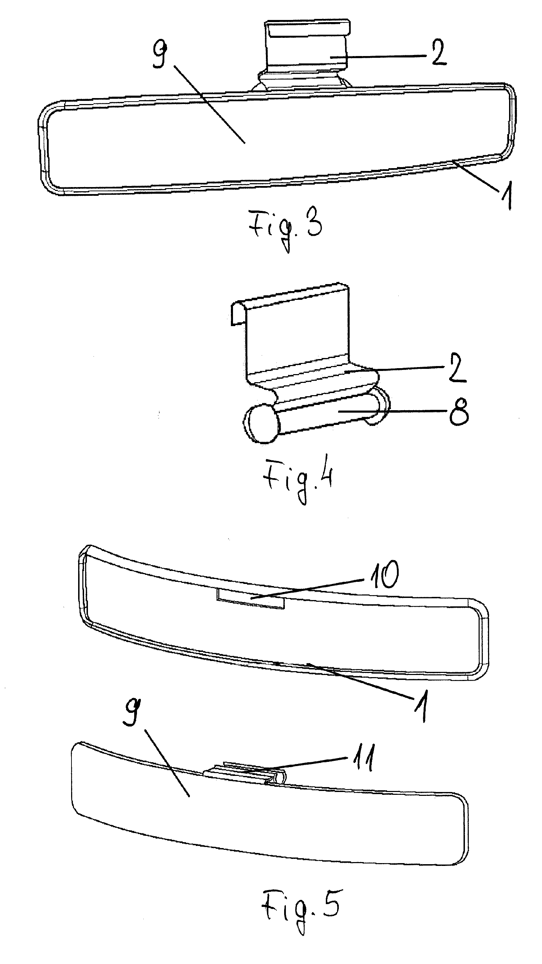

In Fig. 1 ist in einer Frontansicht der gewöhnliche Innenrückblickspiegel einschließlich des Beobachtungsspiegels, in Fig. 2 in einem seitlichen Schnitt nach Fig. 1 der Beobachtungsspiegel einschließlich seiner Befestigung, in Fig. 3 in einer perspektivischen Ansicht der eigentliche Beobachtungsspiegel, in Fig. 4 der einzelne Halter des Beobachtungsspiegels, in Fig. 5 in einer Vorderansicht die Vorderseite des eigentlichen Beobachtungsspiegels mit abtrennbarem konvexen Spiegelglas dargestellt.

### Ausführungsbeispiele der Erfindung

In Fig. 1 ist ein Bereich im Fahrzeuginnenraum dargestellt, in dem der gewöhnliche Innenrückblickspiegel 5 an der Frontscheibe 4 unter dem vorderen Rand des Dachhimmels 3 angeordnet ist. In diesem Bereich zwischen dem gewöhnlichen Innenrückblickspiegels 5 und dem vorderen Rand des Dachhimmels 3 ist der Beobachtungsspiegel 1 angeordnet. Der Beobachtungsspiegel 1 nach Fig. 2 bis 4 umfasst einen Halter 2, der zum Dachhimmel 3 befestigt ist. Der Halter 2 ist aus Blech ausgebildet und zum Dachhimmel 3 im Bereich zwischen dem Versteifungsrahmen 4 des Dachhimmels 3 und dem Beleuchtungsmodul 12 befestigt, der im Dachhimmel 3 angeordnet ist und dessen Bestandteil bildet. Der Beobachtungsspiegel 1 ist mit dem Halter 2 mittels einer Clipverbindung 6 lösbar und schwenkbar verbunden. Die schwenkbare Clipverbindung 6 wird durch einen zylindrischen Teil 8 und die Backen 7 gebildet und zwar so, dass der zylindrische Teil 8 zum Halter 2 befestigt ist und die Backen 7 an der Rückseite des Beobachtungsspiegels 1 angebracht und schwenkbar mit dem zylindrischen Teil 8 verbunden sind. Diese Lagerung des zylindrischen Teils 8 in den Backen 7 ermöglicht die Schwenkbewegung des zylindrischen Teils 8. So gebildete schwenkbare Clipverbindung 6 ermöglicht die Einstellung des Beobachtungsspiegels 1 in die für das Beobachten der Fahrzeuginsassen im Fondbereich des Fahrzeuges benötigte Beobachtungsposition.

Der Beobachtungsspiegel 1 weist auf seiner Vorderseite ein konvexes Spiegelglas 9 auf, das für das Beobachten des Fondbereiches geeignet gewölbt ist. Das konvexe Spiegelglas 9 kann zum Beobachtungsspiegel 1 fest befestigt werden, z.B. durch Kleben.

Die Clipverbindung 6 ermöglicht ein einfaches Abnehmen der Backen 7 des Beobachtungsspiegels 1 vom zylindrischen Teil 8 des Halters 2. Die lösbare Verbindung des Halters 2 mit dem Beobachtungsspiegel 1 ermöglicht einen einfachen Austausch des Beobachtungsspiegels 1 für einen ähnlichen Beobachtungsspiegel 1, jedoch mit anderer Wölbung der Spiegelfläche.

Anhand der oben genannten Beschreibung ist die eigentliche Montage leicht durchführbar. Der Beobachtungsspiegel 1 wird mit seinen Backen 7 am zylindrischen Teil 8 des Halters 2 eingerastet. Nachfolgend wird der benötigte Beobachtungswinkel durch die Verschwenkung des Beobachtungsspiegels 1 eingestellt. Der Ausbau erfolgt einfach durch das Entrasten der Backen 7 vom zylindrischen Teil 8 des Halters 2.

Ein weiteres Ausführungsbeispiel bietet solche Lösung an, dass die Befestigung des konvexen Spiegelglases 9 zur Vorderseite des Beobachtungsspiegels 1 lösbar ausgeführt werden kann. Bei einer lösbaren Verbindung des konvexen Spiegelglases 9 mit dem Beobachtungsspiegel 1 nach Fig. 5 weist der Beobachtungsspiegel 1 eine Rastöffnung 10 und das konvexe Spiegelglas 9 ein Sperrelement 11 auf. Diese Rastöffnung 10 und das Sperrelement 11 ermöglichen eine lösbare Verbindung und die Verrastung des konvexen Spiegelglases 9 an der Vorderseite des Beobachtungsspiegels 1.

Bei diesem Ausführungsbeispiel kann der Ein- und Ausbau bzw. Austausch auf zweierlei Weise erfolgen. Entweder in gleicher Weise wie bei der oben genannten ersten Ausführung, d.h. dass die Backen 7 am zylindrischen Teil 8 des Halters 2 eingerastet oder entrastet werden. Ausgewechselt wird dann der komplette Beobachtungsspiegel. Oder so, dass der Beobachtungsspiegel 1 mit seinen Backen 7 weiterhin am zylindrischen Teil 8 des Halters 2 eingerastet bleibt und nur die Varianten des konvexen Spiegelglases 9 mit unterschiedlicher Wölbung der Spiegelfläche ausgewechselt werden. Der Einbau erfolgt so, dass das Sperrelement 11 des konvexen Spiegelglases 9 in die Rastöffnung 10 des Beobachtungsspiegel 1 einrastet und so wird das konvexe Spiegelglas 9 an der Vorderseite des Beobachtungsspiegels 1 verrastet. Der Ausbau erfolgt in der rückwärtigen Reihenfolge und zwar so, dass das Sperrelement 11 des konvexen Spiegelglases 9 aus der Rastöffnung 10 des Beobachtungsspiegels 1 entrastet wird. Nachfolgend kann ähnliches konvexes Spiegelglas 9 mit unterschiedlicher Wölbung der Spiegelfläche eingebaut werden.

### Gewerbliche Anwendbarkeit

Der erfindungsgemäße Beobachtungsspiegel kann in allen Kraftfahrzeugen zum Beobachten des Rücksitzbankraumes des Fahrzeuges und vorteilhaft bei der Beförderung von Kindern, Tieren und Gegenständen angewendet werden, die während der Fahrt beaufsichtigt werden müssen.

**Verwendete Bezeichnungen**

| | |
|---|---|
| 1. | Beobachtungsspiegel des Fahrzeuges |
| 2. | Halter des Beobachtungsspiegels |
| 3. | Fahrzeugdachhimmel |
| 4. | Versteifungsrahmen des Dachhimmels |
| 5. | gewöhnlicher Innenrückblickspiegel des Fahrzeuges |
| 6. | schwenkbare Clipverbindung |
| 7. | Backen des Beobachtungsspiegels |
| 8. | zylindrischer Teil des Halters |
| 9. | konvexes Spiegelglas |
| 10. | Rastöffnung des Beobachtungsspiegels |
| 11. | Sperrelement des konvexen Spiegelglases |
| 12. | Beleuchtungsmodul |

## Patentansprüche

1. Der im Fahrzeuginnenraum im Bereich zwischen dem gewöhnlichen Innenrückblickspiegel (5) und dem vorderen Rand des Dachhimmels (3) angeordnete und zum Beobachten des Rücksitzbankraumes des Fahrzeuges dienende Beobachtungsspiegel (1), **dadurch gekennzeichnet, das**s er einen Halter (2) umfasst, der fest mit dem Dachhimmel (3) des Fahrzeuges verbunden ist, wobei der Halter (2) und der Beobachtungsspiegel (1) mittels einer Clipverbindung (6) lösbar und schwenkbar miteinander verbunden sind.

2. Der Beobachtungsspiegel (1) nach Anspruch 1 **dadurch gekennzeichnet, dass** die schwenkbare Clipverbindung (6) gebildet wird durch einen
zum Halter (2) befestigten zylindrischen Teil (8) und
Die Backen (7), die an der Rückwand des Beobachtungsspiegels (1) angebracht und mit dem zylindrischen Teil (8) schwenkbar verbunden sind.

3. Der Beobachtungsspiegel (1) nach vorherigen Ansprüchen **dadurch gekennzeichnet, dass** er ein konvexes Spiegelglas (9) umfasst, das die benötigte konvexe Wölbung aufweist.

4. Der Beobachtungsspiegel (1) nach vorherigen Ansprüchen **dadurch gekennzeichnet, dass** das konvexe Spiegelglas (9) mit dem Beobachtungsspiegel (1) fest verbunden ist, wobei die Backen (7) des Beobachtungsspiegels (1) zum zylindrischen Teil (8) des Halters (2) zwecks Austausches des Beobachtungsspiegels (1) für ein konvexes Spiegelglas (9) mit unterschiedlicher Wölbung lösbar befestigt sind.

5. Der Beobachtungsspiegel (1) nach vorherigen Ansprüchen 1 bis 3 **dadurch gekennzeichnet, dass** er eine Rastöffnung (10) aufweist und das konvexe Spiegelglas (9) ein Sperrelement (11) umfasst, mittels dessen das konvexe Spiegelglas (9) mit dem Beobachtungsspiegel (1) lösbar verbunden ist.
